## Europäisches Patentamt

## European Patent Office

## Office européen des brevets

(11) Publication number: **0 086 247**
**B1**

(12) **EUROPEAN PATENT SPECIFICATION**

(45) Date of publication of patent specification: **09.09.87**

(21) Application number: **82101149.1**

(22) Date of filing: **17.02.82**

(51) Int. Cl.⁴: **G 01 D 5/44, G 05 D 16/20**

(54) **Electropneumatic signal converter.**

(43) Date of publication of application:
**24.08.83 Bulletin 83/34**

(45) Publication of the grant of the patent:
**09.09.87 Bulletin 87/37**

(84) Designated Contracting States:
**AT BE CH DE FR GB IT LI LU NL SE**

(56) References cited:
**EP-A-0 039 000**
**GB-A- 507 359**
**US-A-2 975 976**

(73) Proprietor: **Aktiebolaget Somas Ventiler**
**Norrlandsvägen**
**S-661 00 Säffle (SE)**

(72) Inventor: **Norder, Stig**
**Box 25**
**S-661 00 Säffle (SE)**
Inventor: **Nilsson, Lars-Erik**
**Box 25**
**S-661 00 Säffle (SE)**

(74) Representative: **Hynell, Magnus**
**Hynell Patenttjänst AB Box 236**
**S-683 02 Hagfors (SE)**

Courier Press, Leamington Spa, England.

## Description

Technical Field

The invention relates to an electro-pneumatic signal converter for converting an electrical current signal into a pneumatic pressure signal, said converter comprising a force balancing system wherein a magnetic force is balanced against a pneumatic force, said system including a coil, through which an electrical current signal flows, said coil generating a magnetic field when said electrical current signal flows therethrough; a magnetic circuit including a core of ferromagnetic material disposed in said coil, said core having a first end and a second end; a nozzle chamber having a mouth in the form of a nozzle; a flapper of ferromagnetic material extending over said nozzle and defining a gap between said nozzle and said flapper; a feed line for a constant flow of feed air into said nozzle chamber and out through said nozzle into said gap; and a pressure sensing line extending from said nozzle chamber to a pressure-dependent member for transmitting a pneumatic pressure signal from said nozzle chamber to said pressure-dependent member.

Background Art

Signal converters of the kind indicated above are known where the current which is to be converted flows through a coil suspended in a magnetic field caused by a permanent magnet. The forces developed by the current and the magnetic field tend to push the coil out of the magnetic field. The force is compared, by a balance beam which is movable in a spring band cross, with the force which is developed in a bellows connected to the balance beam. If these forces are not alike, the position of the beam is altered. The new position is converted in a nozzle into a pneumatic pressure which acts on an upper diaphragm in a pneumatic amplifier belonging to the device. The device also includes a number of further components and functions which will not be described in more detail here.

This known device affords satisfactory linearity but also has certain decided disadvantages and limitations. Thus the high degree of complication of the device means that it is expensive which limits its field of application for economic reasons. The multiplicity of components also makes the device very demanding in space. This makes it difficult or impossible to use in a limited space, as, for example, in connection with compact computerized centres. The number of movable components, particularly the comparatively long balance beam, also makes it difficult to balance out which reduces the speed of reaction, that is to say the capacity to alter the pneumatic pressure signals quickly after alterations in the current signals. This is, in fact, a factor which is acquiring ever greater importance in certain branches of industry, for example in the petrochemical industry (PE manufacture) and the paper industry (machine speeds up to 1200 rpm). The number of mechanical components in conventional systems also leads to friction which produces a delayed action which is expressed in the same manner as magnetic hysteresis, which limits the possibilities of achieving the best transfer characteristic. In addition, conventional systems are very sensitive to vibration which in many industrial connections is a very serious, not to say decisive disadvantage.

A further limitation of conventional electro-pneumatic signal converters is that they cannot use a working pressure of 4—6 bar, which is the prevalent working pressure in industry, without converters.

For a signal converter discussed at the outset, reference can be made to US—A—2 975 976. In this patent specification there is disclosed an electro-pneumatic temperature control system including a flapper valve element. A characteristic feature of the device is that the flapper valve element vibrates as a result of the alternating current through the winding of the electro-magnet included in the system for actuating the valve flapper. During the periods of time when the flapper is attracted by the magnet, the nozzle will be completely closed. This can be tolerated since in this system there is no need for and must not be utilized any damping. On the other hand this known device cannot operate with direct current signals, since a condition for such mode of operation is that the flapper does not completely close the magnetic circuit.

Reference is also made to GB—A—507 359 relating to electro-magnetic relays. This relay comprises an electro-magnet with a movable armature cooperating with the one end of a core of ferromagnetic material. The relay further comprises a link of ferromagnetic material completing the magnetic circuit between the armature and the other end of the core, and a damping sleeve of electrically conducting, non-ferromagnetic material surrounding a part of said core. In the device a non-magnetic stud projects from the armature towards the core of the magnet to prevent the armature contacting with the core and sticking to it on the release of the relay.

EP—A—0 039 000 discloses a valve for gas regulation having an electromagnet with a core and a rod, the latter acting as an armature axially movable within said core. This rod carries at one end a valve body cooperating with a valve seat contained in the extension of said core.

Disclosure of the Invention

The object of the invention is to eliminate the above mentioned limitations and disadvantages in conventional electro-pneumatic converters. More specifically, it is an object to offer a converter with very few movable parts, small space requirements, extremely satisfactory tolerance of vibration, satisfactory possibilities for balancing out and, inter alia, very high speed of reaction, and with satisfactory possibilities for achieving the optimum between hysteresis and transfer characteristics.

These and other objects can be achieved therein that the nozzle chamber is provided in said first end of the core; a link of ferromagnetic material completing the magnetic circuit between said flapper and said second end of said core; a body of electrically conducting non-ferromagnetic material surrounding said core in a region of the core adjacent to said first end of said core, said body generating a core magnetic field in said core as a result of the generation of an induced current in said body due to alterations in current in said coil, said core magnetic field being oppositely directed to said coil magnetic field, said core magnetic field exerting a damping effect on movement of said flapper, said movement being damped such that the pneumatic force can balance the magnetic force; and a spacing member of non-ferromagnetic material between said flapper and said core for preventing short-circuiting of said magnetic circuit between said core and said flapper.

The operation of the signal converter is very simple. The feed air is conveyed into the nozzle chamber from a pressure source at a constant speed. The pressure source may consist, for example, of a driving air source at 4 to 6 bar of the kind which is normal in industry. In order to obtain a constant flow of air, a throttle is provided in the entry passage so that the air flows into the nozzle chamber at sonic speed. From the nozzle chamber, the air flows out again through the nozzle into the gap between the mouth of the nozzle and the flapper. In the course of this, the air acts with an upwardly directed force on the flapper. At the same time, the current signal which is flowing through the coil generates a magnetic field in the core which acts through a downward force on the flapper. As a result of the current strength in the signal, the flapper therefore comes to assume different positions so that the pneumatic and magnetic forces which are acting on the flapper balance one another. Depending on the position of the flapper, the size of the air gap between the nozzle and the flap varies which in turn acts on the pressure in the nozzle and in the nozzle chamber. The pressure and the variations in pressure are supplied via a pressure sensing line to the pressure-dependent member which is intended to be acted upon. In order that the device may work in a satisfactory manner, it is important that the flapper should not move so quickly that the nozzle is closed before the air pressure has succeeded in balancing the magnetic force generated. Therefore the body of electrically conducting non-ferromagnetic material is provided around the core in a region adjacent to the first end of the core such that a core magnetic field is generated in the core as a result of the generation of an induced current in said body, which core magnetic field exerts a damping effect on movement of the flapper such that the pneumatic force can balance the magnetic force as has been explained above.

Since the air gap between the flapper and the nozzle is very small, every alteration in the size of the air gap has a very powerful effect on the air pressure while the magnetic field, on the other hand, is influenced comparatively little. In order to avoid oscillation the movement of the flapper towards the nozzle is limited according to the invention by the provision of the spacing member of non-ferromagnetic material between the flapper and the core. The spacing member may be provided at the underside of the flapper, that is to say at the side which is adjacent to the nozzle, and may consist of a coating or plate of non-ferromagnetic, preferably dielectric material, which prevents short-circuiting of the magnetic circuit between the core and the flapper. This plate or coating may appropriately be given a thickness between 0.1 and 0.5 mm, the thickness being selected depending on the other dimensions of the signal converter.

Further objects together with characteristics of the invention will be apparent from the following description of a preferred form of embodiment and the following patent claims.

Brief Description of Drawings

In the following description of a preferred form of embodiment, reference is made to the accompanying figures of the drawings in which

Fig. 1A to 1C show three conceivable ways of disposing a signal converter in a regulating system,

Fig. 2 constitutes a side view of the signal converter according to a preferred form of embodiment of the invention,

Fig. 3 constitutes a section III—III of the signal converter according to the invention,

Fig. 4 shows diagrammatically the magnetic circuit in the converter according to the invention, and

Fig. 5 illustrates how a signal converter according to the invention can be connected directly to a so-called positioner in a pneumatic setting device.

Best Mode of Carrying out the Invention

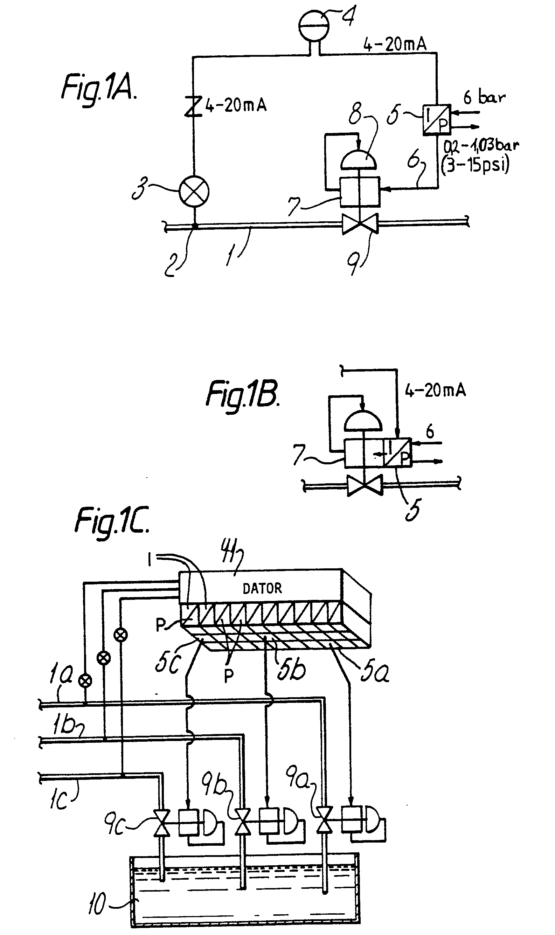

The control equipment shown diagrammatically in Fig. 1A is adapted to regulate the flow in a pipeline 1. The flow in the pipe 1 is measured at a measuring point 2 and generates a pressure signal which is converted into a current signal in a pressure-current converter, a so-called pressure transmitter 3.

The actual value from the pressure transmitter 3 is treated in a regulator 4 with setting of the guide valve. The regulator 4 delivers a setting value in the form of a signal current of 4—20 mA to an electro-pneumatic, so-called IP converter 5. The IP converter 5 is fed with driving air from a standard pressure source of 6 bar. At the output side of the IP converter a pneumatic pressure signal is obtained which is supplied, via a pressure line 6, to a so-called positioner 7 which controls a setting device 8 for setting the flap in a flap valve 9 in the pipeline 1 so that the desired flow is obtained in the pipe. Fig. 1A illustrates an arrangement which is very common in conventional installations, where the IP converter has to be placed at a distance from the positioner in view of the space requirements of the converter but often also because of the sensitivity of conventional IP converters to vibration. The IP converter according to the invention can also be disposed in the manner shown in Fig. 1A. The invention, however, provides great possibilities for placing the IP converter directly on the positioner 7, as illustrated in Fig. 1B, since the converter requires very little space and at the same time is extremely tolerant of vibrations. The small space requirements also make it possible, in practice, to dispose a large number of IP converters in a centre connected to a computer for controlling a large industrial plant. Fig. 1C illustrates this case. In the example, a portion of a large installation is shown, where the pipes 1a, 1b and 1c can be assumed to constitute pipes for dyes which are to be mixed in a dyeing bath 10. The three IP converters 5a, 5b and 5c which are included in a large battery of converters connected to a computer 41, are coupled to the respective positioners to regulate the flow in the pipes 1a—1b by controlling the respective flap valves 9a—c.

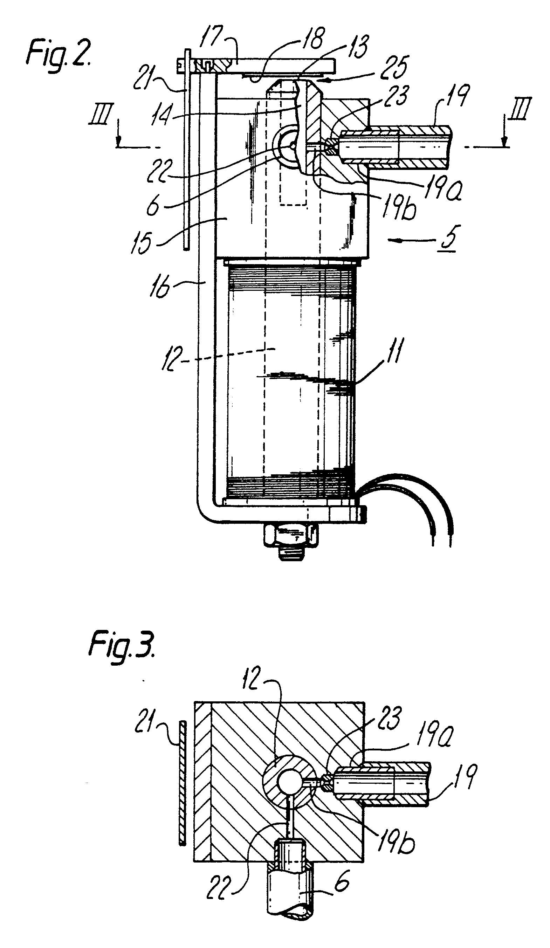

The construction of the electro-pneumatic converter 5 — the IP converter — is shown in Figs. 2 and 3. The arrangement comprises a coil 11 on a core 12 of ferromagnetic material. The core 12 extends past the upper end of the coil 11 and becomes narrower in its uppermost portion where a nozzle 13 with a nozzle chamber 14 is disposed, Fig. 3. In this case, a nozzle is understood to mean the mouth of the nozzle chamber. Between the coil 11 and the nozzle 13, the core 12 is surrounded by a body 15 of electrically conducting but non-ferromagnetic material, for example brass, copper, aluminium or the like metal. According to the form of embodiment, the metal body 15 has a square horizontal section and is firmly screwed to a bracket 16 of ferromagnetic material of the same kind as the core 12.

Disposed above the nozzle 13 is a flapper 17 which is also made of the same ferromagnetic material as the bracket 16 and the core 12. The flapper 17 is articulately mounted on the upper end of the bracket 16 and comprises a balance 21. Together, the core 12, the bracket 16 and the flapper 17 form a magnetic circuit for the magnetic field which is generated by the current in the coil 11. In order that the flow may be generated, a current signal must flow through the coil 11. In order to prevent the magnetic circuit from being short-circuited, there is a spacing member in the form of a thin washer 18 of plastics or the like at the under side of the flapper 17. The washer 18 has a thickness of 0.25 mm according to the form of embodiment.

Connected to the chamber 14 is a feed pipe 19 for driving air. According to the form of embodiment, the driving air is introduced through the metal body 15, that is to say in the radial direction towards the chamber 14. However, it is *per se* also possible to introduce the driving air axially through the core 12 from the lower end, in which case the core 12 may be produced, for example, from a length of tubing. With reference to Fig. 2, the infeed conduit through the metal body 15 is designated by the numeral 19a and its continuation in the wall of the core 12 by the numeral 19b. Disposed in the feed conduit 19a in the metal body 15 is a throttle 23 in the form of drilled-out ruby, so that the air which passes through the conduit 19b into the chamber flows into the chamber 14 at sonic speed, which guarantees a constant flow of air.

From the chamber 14, a pressure sensing passage 22 leads via a pressure line 6 to the pressure-dependent member, for example a positioner, which is to be acted upon by the variations in pressure in the nozzle chamber 14. The gap between the nozzle 13 and the washer 18 at the underside of the flapper is designated by 25.

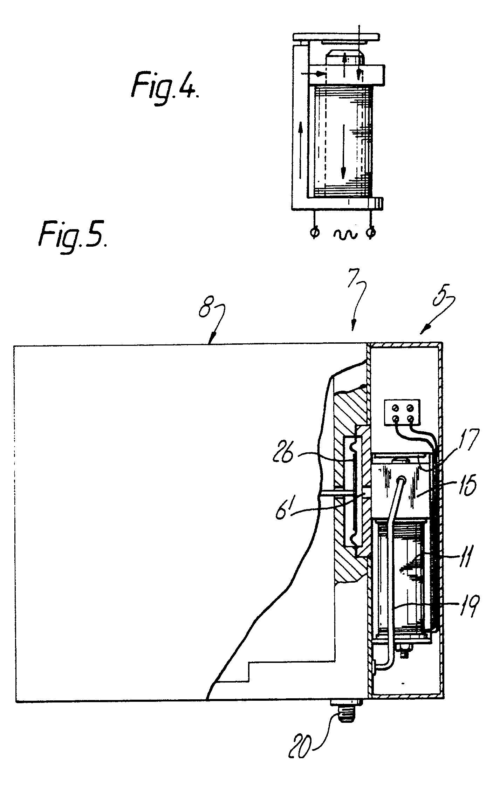

The device thus described works in the following manner. A current signal through the coil 11 generates a magnetic field in the core 12. The magnetic field tends to pull the flapper 17 in the downward direction. As a result of the fact that the flapper alters its position and so the air gap 25 is reduced, the air pressure is altered in the nozzle 13 and hence in the nozzle chamber 14. The pressure in the nozzle thus influences the flapper in the upward direction so that the downwardly directed magnetic force and the upwardly directed pneumatic pressure force balance one another. Variations in pressure in the nozzle chamber 14 are detected by the pressure sensing passage 22 leading into the nozzle chamber and are transmitted via the pressure line 6 to the pressure-dependent member. The reaction speed of the device is very high. In order to prevent the flapper 17 from moving down so quickly that the nozzle 13 is completely closed before the air pressure in the nozzle has succeeded in balancing the magnetic force, the metal body 15 is provided. Currents are actually induced in the metal body 15 which generate an oppositely directed magnetic field in the core 12 when the current signal in the coil 11 is altered. Fig. 4 illustrates the magnetic circuit, the longer arrows symbolizing the magnetic field which is generated by the coil 11, while the shorter arrows illustrate the oppositely directed field which is generated by the current which is induced in the metal body 15 as a result of alterations in the signal current. In combination with the washer, the metal body 15 affords a suitable damping in the system, and the washer 18 prevents the thickness of the gap 25 from approaching zero. Thus, through the washer 18, the flapper 17 is prevented from oscillating when it is in its lower position, where every alteration causes very great alterations in the air pressure whereas the magnetic flux is influenced comparatively little.

Fig. 5 illustrates how an IP converter 5 according to the invention as a result of its handy format and vibration-tolerant formation, can be advantageously connected directly to a positioner 7 and setting device 8 so that from these elements, an integrated unit is obtained with small external dimensions. For the IP converter 5, the same designations have been used for corresponding parts as in Fig. 2. The said integrated unit is fed with driving air to a common connection 20 from where driving air is obtained on the one hand for the setting device 8 and on the other hand for the IP converter 5. From the IP converter, a pressure signal is obtained which is transmitted via the directly coupled pressure-signal connection 6' to the pressure-sensitive diaphragm 26 of the positioner 7 so as to influence the setting device 8 in the desired manner.

## Claims

1. An electro-pneumatic signal converter for converting an electrical current signal into a pneumatic pressure signal, said converter comprising a force balancing system wherein a magnetic force is balanced against a pneumatic force, said system including a coil (11), through which an electrical current signal flows, said coil generating a magnetic field when said electrical current signal flows therethrough; a magnetic circuit including a core (12) of ferromagnetic material disposed in said coil, said core having a first end and a second end; a nozzle chamber (14) having a mouth in the form of a nozzle (13); a flapper (17) of ferromagnetic material extending over said nozzle and defining a gap (25) between said nozzle and said flapper; a feed line (19, 19a, 19b) for a constant flow of feed air into said nozzle chamber (14) and out through said nozzle (13) into said gap (25); and a pressure sensing line (22, 24) extending from said nozzle chamber (14) to a pressure-dependent member (7) for transmitting a pneumatic pressure signal from said nozzle chamber to said pressure-dependent member, characterized in that the nozzle chamber (14) is provided in said first end of the core (12); a link (16) of ferromagnetic material completing the magnetic circuit between said flapper and said second end of said core; a body (15) of electrically conducting non-ferromagnetic material surrounding said core (12) in a region of the core adjacent to said first end of said core, said body generating a core magnetic field in said core as a result of the generation of an induced current in said body due to alterations in current in said coil, said core magnetic field being oppositely directed to said coil magnetic field, said core magnetic field exerting a damping effect on movement of said flapper, said movement being damped such that the pneumatic force can balance the magnetic force; and a spacing member (18) of non-ferromagnetic material between said flapper (17) and said core (12) for preventing short-circuiting of said magnetic circuit between said core and said flapper.

2. A signal converter as claimed in claim 1, wherein said non-ferromagnetic material of said spacing member (18) is a dielectric material.

3. A signal converter as claimed in claim 1, wherein said spacing member (18) is provided on a side of said flapper (17) adjacent to said nozzle (13).

## Patentansprüche

1. Ein elektropneumatischer Signalumwandler zur Umwandlung eines elektrischen Stromsignals in ein pneumatisches Drucksignal wobei der erwähnte Umwandler ein Kraftbalancierendes System einschliesst worin eine magnetische Kraft gegen eine pneumatische Kraft balanciert wird und wobei das erwähnte System eine Spule (11) einschliesst, durch welche ein elektrischer Signalstrom fliesst, und wobei die erwähnte Spule ein magnetisches Feld generiert wenn der erwähnte elektrische Signalstrom sie durchfliesst; einen magnetischen Kreis, der einen in der Spule angeordneten Kern (12) aus ferromagnetischem Material einschliesst wobei der erwähnte Kern ein erstes und ein zweites Ende aufweist; eine Mundstückkammer mit einer Öffnung in der Form eines Mundstücks (13), eine Ventilklappe (17) aus ferromagnetischem Material, welche sich über das erwähnte Mundstück ausbreitet und eine Spalte (25) zwischen dem erwähnten Mundstück und der erwähnten Klappe bildet; eine Luftzufuhr (19, 19a, 19b), die einen Konstanten Luftstrom der erwähnten Mundstückkammer und durch das Mundstück der erwähnten Spalte (25) zuführt; und eine Druckabfühlungslinie (22, 24) von der erwähnten Mundstückskammer (14) bis zu einem Druckabhängigen Organ (7) für die Überführung eines pneumatischen Drucksignals von dem erwähnten Mundstückkammer zum druckabhängigen Organ, dadurch gekennzeichnet dass die Mundstückskammer (14) in dem erwähnten ersten Ende des Kernes (12) liegt; ein Verbindungsstück (16) aus ferromagnetischem Material, welches den magnetischen Kreis zwischen der erwähnten Klappe und dem zweiten Ende des Kernes ausfüllt; ein Körper (15) aus elektrisch leitendem, nicht-ferromagnetischem Material welcher den erwähnten Kern (12) in einen Gebiet anschliessend an das erwähnte erste Ende des erwähnten Kernes umschliesst, wobei der erwähnte Körper ein magnetisches Kernfeld in dem erwähnten Kern erzeugt als das Resultat der Erzeugung eines induzierten Stromes in dem erwähnten Körper, verursacht durch Änderungen des Stromes in der erwähnten Spule, wobei das erwähnte magnetische Kernfeld die entgegengesetzte Richtung des magnetischen Feldes des Kernes aufweist, wobei das erwähnte magnetische Kernfeld eine dämpfenden Wirkung auf die Bewegung der erwähnten Klappe aufweist wobei die Bewegung so gedämpft wird dass die pneumatische Kraft die magnetische Kraft balancieren kann; und ein Zwischenteil (18) aus nicht ferritischem Material zwischen der erwähnten Klappe (17) und dem erwähnten Kern (12) zur Vermeidung des Kurzschlusses des erwähnte magnetischen Kreises zwischen dem erwähnten Kern und der erwähnten Klappe.

2. Ein Signalumwandler gemäss Anspruch 1, bei welchem das erwähnte nicht-ferromagnetische Material des erwähnten Zwischenteils (18) ein dielektrisches Material ist.

3. Ein Signalumwandler gemäss Anspruch 1, bei welchem das erwähnte Zwischenteil (18) angebracht ist and der zum Mundstück (13) gerichteten Seite der Klappe (17).

**Revendications**

1. Convertisseur de signal électropneumatique pour convertir un signal de courant électrique en un signal de pression pneumatique, ledit convertisseur comprenant un système d'équilibrage des forces où une force magnétique est équilibrée par rapport à une force pneumatique, ledit système comportant une bobine (11) à travers laquelle s'écoule un signal de courant électrique, ladite bobine produisant un champ magnétique lorsque ledit signal de courant électrique s'écoule à travers elle; un circuit magnétique comprenant un noyau (12) en matériau ferromagnétique disposé dans ladite bobine, ledit noyau ayant une première extrémité et une seconde extrémité; une chambre à tubulure (14) ayant une embouchure sous la forme d'une tubulure (13); un clapet (17) en matériau ferromagnétique s'étendant sur ladite tubulure et définissant un espace (25) entre ladite tubulure et ledit clapet; une ligne d'alimentation (19, 19a, 19b) pour un écoulement constant d'air d'alimentation dans ladite chambre à tubulure (14) et vers l'extérieur à travers ladite tubulure (13) dans ledit espace (25); et une ligne de détection de pression (22, 24) s'étendant de ladite chambre à tubulure (14) vers un organe dépendant de la pression (7) pour transmettre un signal de pression pneumatique de ladite chambre à tubulure audit organe dépendant de la pression, caractérisé en ce que la chambre à tubulure (14) est prévue dans la première extrémité du noyau (12); un lien (16) en matériau ferromagnétique complétant le circuit magnétique entre ledit clapet et ladite seconde extrémité dudit noyau; un corps (15) en matériau électriquement conducteur non ferromagnétique entourant ledit noyau (12) dans une région du noyau adjacente à ladite première extrémité dudit noyau, ledit corps produisant un champ magnétique du noyau dans ledit noyau par suite de la production d'un courant induit dans ledit corps dû à des altérations de courant dans ladite bobine, ledit champ magnétique du noyau étant opposé audit champ magnétique dans la bobine, ledit champ magnétique dans le noyau exerçant un effet d'amortissement sur le mouvement dudit clapet, ledit mouvement étant amorti de manière que la force pneumatique puisse équilibrer la force magnétique; et un organe d'espacement (18) en matériau non ferromagnétique entre ledit clapet (17) et ledit noyau (12) pour empêcher la mise en court-circuit dudit circuit magnétique entre ledit noyau et ledit clapet.

2. Convertisseur de signal selon la revendication 1, où ledit matériau non ferromagnétique dudit organe d'espacement (18) est un matériau diélectrique.

3. Convertisseur de signal selon la revendication 1, où ledit organe d'espacement (18) est prévu d'un côté dudit clapet (17) adjacent à ladite tubulure (13).

Fig.1A.

4

4-20mA

4-20mA

6 bar

I/P

0,2-1,03bar
(3-15psi)

8

5

3

6

7

2    1    9

Fig.1B.

4-20mA

7

6

I/P

5

Fig.1C.

I

4

DATOR

P

P

5C    P    5b    5a

1a

1b

1c

9c    9b    9a

10

Fig. 2.

17 18 13 25 23 19 19a 19b 5 14 22 6 15 16 12 11 21

III III

Fig. 3.

12 23 19a 19 19b 6 21 22

Fig.4.

Fig.5.